# EUROPEAN PATENT SPECIFICATION

(11) **EP 4 465 314 B1**
(45) Date of publication and mention of the grant of the patent: **11.02.2026**
(21) Application number: 23909125.9
(22) Date of filing: 18.07.2023
(51) Int. Cl.: H01F 41/02, H01F 1/057

(54) **LARGE-DIMENSION R-FE-B SINTERED MAGNET, PREPARATION METHOD THEREFOR, AND USE THEREOF**
R-FE-B-SINTERMAGNET GROSSER ABMESSUNGEN, HERSTELLUNGSVERFAHREN DAFÜR UND VERWENDUNG DAVON
AIMANT FRITTÉ R-FE-B DE GRANDE DIMENSION, SON PROCÉDÉ DE PRÉPARATION ET SON UTILISATION

(30) Priority: 30.12.2022 CN 202211734983
(43) Date of publication of application: 20.11.2024
(73) Proprietor: Yantai Zhenghai Magnetic Material Co., Ltd., Yantai Shandong 264006 (CN)
(72) Inventor: PENG, Buzhuang, Yantai, Shandong 264006 (CN); LI, Dongdong, Yantai, Shandong 264006 (CN); XIANG, Junjia, Yantai, Shandong 264006 (CN); SU, Guodong, Yantai, Shandong 264006 (CN); XUE, Meng, Yantai, Shandong 264006 (CN)
(74) Representative: Gille Hrabal Partnerschaftsgesellschaft mbB Patentanwälte
(86) International application number: PCT/CN2023/107860
(87) International publication number: WO 2024/139182

(56) References cited:
- CN-A- 103 295 713
- CN-A- 106 463 223
- CN-A- 108 039 259
- CN-A- 111 755 235
- CN-A- 112 927 921
- CN-A- 113 808 839
- CN-A- 114 360 831
- CN-A- 115 116 728
- JP-A- 2006 179 963
- US-A1- 2009 020 193
- US-A1- 2021 407 713
- US-B2- 10 530 198
- US-B2- 9 786 419

## Description

The present application claims priority to the Patent Application No. 202211734983.2 entitled "LARGE SINTERED R-FE-B MAGNET, PREPARATION METHOD AND USE THEREOF", filed with the China National Intellectual Property Administration on December 30, 2022.

### TECHNICAL FIELD

The present disclosure relates to the field of rare earth permanent magnet materials, and particularly, to a large sintered R-Fe-B magnet, a preparation method and use thereof.

### BACKGROUND

In the current global trend of low-carbon economy and energy revolution, countries pay more and more attention to green energies. Reducing fossil energy combustion and accelerating the development and utilization of renewable energies have become the orientation of the countries in the world. Wind power, as a technically mature and environment-friendly renewable energy, is widely adopted throughout the world, and has become the most frequently used renewable energy along with hydropower. Currently, wind power technology has been gradually perfected, and the installation capacities of onshore wind power and offshore wind power are increasing year by year. Sintered neodymium-iron-boron permanent magnets are used in wind power generators, which consist of nearly one-third of the cost of the generator. Along with the rapid development of large engineering machinery, the demand for neodymium-iron-boron permanent magnet in generators is also increased. Such an industry requires a large size of magnet, with the thickness of the products basically being 10 mm or greater.

Along with the increasing use of rare earth permanent magnet materials, the price of heavy rare earth materials is remarkably increased due to scarcity of heavy rare earth materials, and reducing the consumption of heavy rare earth materials has become an urgent problem for large sintered magnets. The grain boundary diffusion has been used in the massive production of sintered neodymium-iron-boron magnets, which diffuses heavy rare earth elements Dy and Tb disposed on the surface of the sintered neodymium-iron-boron magnet into the interior of the sintered neodymium-iron-boron magnet along the grain boundary, thus improving the micro structure of the grain boundary and elevating the coercivity of the sintered neodymium-iron-boron magnets. By suppressing the magnetic exchange coupling effect in the grain boundary, the method achieves magnetic hardening of the grain boundary, and greatly elevates the coercivity of the sintered neodymium-iron-boron magnets with basically no decrease in the remanence of the sintered neodymium-iron-boron magnets. The grain boundary diffusion is achieved by disposing heavy rare earth elements on the surface of the sintered neodymium-iron-boron magnet, allowing the grain boundary phase in a molten state at a high temperature, and diffusing by means of the concentration difference of heavy rare earth between the surface and the interior of the sintered neodymium-iron-boron magnet. For a magnet with a smaller thickness, the heavy rare earth may easily diffuse into the central part of the magnet, and the distribution of the heavy rare earth for diffusion may be relatively uniform at both the grain boundary of the surface of the magnet and the grain boundary of the interior of the magnet. However, the diffusion of the heavy rare earth into the magnet becomes harder along with the increase of the thickness of the magnet, and directly increasing the quantity of the heavy rare earth disposed on the surface of the magnet may lead to the rapid rise of the product cost. As such, a grain boundary diffusion process or method for large sintered magnets may have great application value.

CN 111 755 235 A and US 2009/020193 A1 show examples of R-Fe-B sintered magnets subjected to grain boundary diffusion, and having a coercivity gradient between surface and center of the magnet.

### SUMMARY

The present disclosure provides a sintered R-Fe-B magnet having a thickness not less than 10 mm in an orientation direction, wherein any cross section along the orientation direction is marked as a diffusion cross-section area, a side of the diffusion cross-section area close to the outer surface of the sintered R-Fe-B magnet is marked as the surface of the diffusion cross-section area, and the difference between the coercivity of the surface of the diffusion cross-section area and the coercivity at 5 mm away from the surface of the diffusion cross-section area is △H, wherein △H ≤ 50 kA/m. In the present disclosure, the surface of the diffusion cross-section area is preferably a part 1 mm away from the outer surface of the sintered R-Fe-B magnet.

According to an embodiment of the present disclosure, △H is, e.g., not greater than 45 kA/m, such as 42 kA/m or 38 kA/m.

According to an embodiment of the present disclosure, the thickness in the orientation direction is, e.g., 10 mm to 20 mm, such as 11 mm or 15 mm.

According to an embodiment of the present disclosure, the raw materials of the sintered R-Fe-B magnet comprise R, B, Fe, and M, wherein:
R has a content by weight of 27 wt%-34 wt%, preferably 29 wt%-32 wt%, such as 30.2 wt%;
M has a content by weight of 0 wt%-5 wt%, preferably 0 wt%-3 wt%, such as 2 wt%.

According to an embodiment of the present disclosure, R is selected from at least one of rare earth elements Nd, Pr, Tb, Dy, Gd, and Ho.

According to an embodiment of the present disclosure, M is selected from at least one of Ti, V, Cr, Mn, Co, Ga, Cu, Si, Al, Zr, Nb, W, and Mo.

According to the invention as defined in claim 1, a preparation method of the sintered R-Fe-B magnet described above is provided, comprising the following steps:
(1) manufacturing a blank of the R-Fe-B magnet having a thickness ≥ 10 mm;
(2) diffusion part disposing: disposing diffusion parts on at least 2 surfaces in the orientation direction of the blank obtained in step (1), wherein each of the diffusion parts comprises at least 1 RH layer and 1 M layer, wherein the M layer is in direct contact with the surface of the blank, the RH layer is separated from the blank by at least 1 M layer; and
(3) thermal diffusion treatment: conducting a thermal diffusion treatment on the blank with thick diffusion layers disposed in step (2) to give the sintered R-Fe-B magnet; wherein the sintered R-Fe-B magnet has a thickness not less than 10 mm in an orientation direction, any cross section along the orientation direction is marked as a diffusion cross-section area and one side of the diffusion cross-section area close to the outer surface of the sintered R-Fe-B magnet is marked as the surface of the diffusion cross-section area, and the difference between the coercivity of the surface of the diffusion cross-section area and the coercivity at 5 mm away from the surface of the diffusion cross-section area is △H, wherein △H ≤ 50 kA/m.

According to an embodiment of the present disclosure, in step (1), the blank of the R-Fe-B magnet is manufactured from the above raw materials of the sintered R-Fe-B magnet by methods known in the art, which is not specified in the present disclosure.

According to an embodiment of the present disclosure, in step (2), a RH layer and a M layer are alternately disposed in the diffusion parts, wherein the RH layer is separated from the blank by at least 1 M layer, the RH layer comprises 1-3 layers and the M layer comprises 1-3 layers .

According to an exemplary embodiment of the present disclosure, the diffusion part comprises 1 M layer and 1 RH layer.

According to an exemplary embodiment of the present disclosure, the diffusion part comprises 2 M layers and 2 RH layers disposed in an order from the surface of the blank of a first M layer, a first RH layer, a second M layer, and a second RH layer. Preferably, the first M layer and the second M layer may be identical or different. Preferably, the first RH layer and the second RH layer may be identical or different. According to an embodiment of the present disclosure, in the diffusion part, each RH layer has a thickness of 1 µm to 70 µm, e.g., 10 µm, 20 µm, 30 µm, 40 µm, or 50 µm. According to an embodiment of the present disclosure, the method for manufacturing the RH layer specifically comprises: applying an RH slurry on 2 surfaces of the blank in the orientation direction, and drying to give the RH layer.

According to an embodiment of the present disclosure, the RH slurry comprises a heavy rare earth element, an organic solid, and a solvent.

According to an embodiment of the present disclosure, the mass ratio of the heavy rare earth element to the organic solid to the solvent in the RH slurry is (40-70):(0.5-12):(0-50), e.g., 62:8:30 or 60:8:32.

According to an embodiment of the present disclosure, the heavy rare earth element includes at least one of metal dysprosium, metal terbium, dysprosium hydride, terbium hydride, dysprosium fluoride, terbium fluoride, dysprosium oxide, and terbium oxide.

According to an embodiment of the present disclosure, the organic solid is at least one selected from rosin-modified alkyd resin, thermoplastic phenolic resin, urea-formaldehyde resin, and polyvinyl butyral.

According to an embodiment of the present disclosure, the solvent is selected from at least one of an alcohol solvent (e.g., methanol or ethanol), an ether solvent (e.g., diethyl ether), and an aromatic hydrocarbon solvent (e.g., benzene); preferably, the solvent is ethanol.

According to an embodiment of the present disclosure, in the diffusion part, each M layer has a thickness less than 20 µm and greater than 0.1 µm, preferably less than or equal to 10 µm, e.g., 1 µm, 2 µm, 3 µm, 4 µm, or 5 µm.

According to an embodiment of the present disclosure, in the diffusion part, the thickness ratio of each RH layer to each M layer is (1-70):(0.1-20), e.g., 50:3, 40:3, 35:3, 40:2, or 35:2.

According to the invention, the method for manufacturing the M layer comprises: applying a slurry containing an M powder on 2 surfaces of the blank in the orientation direction, and drying to give the M layer. According to the invention, the slurry containing the M powder comprises the M powder, an organic solid, and a solvent.

According to an embodiment of the present disclosure, the mass ratio of the M powder to the organic solid to the solvent in the slurry containing the M powder is (20-70):(1-10):(0-50), e.g., 60:5:35 or 55:5:40.

According to the invention, the M powder includes at least one of graphite powder, titanium powder, zirconium powder, molybdenum powder, tungsten powder, titanium oxide, zirconium oxide, molybdenum oxide, and tungsten oxide, and M powder has an oxygen atom content less than 3%, preferably less than 1%.

According to an embodiment of the present disclosure, the M powder comprises a powder having a particle size less than 5 µm, wherein a powder having a particle size of between 0.5 µm and 1.8 µm is more than 50%, preferably more than 65%, of the total mass of the powder.

Generally, as the diffusion progresses, the heavy rare earth on the surface of the magnet is consumed, and the concentration difference becomes smaller due to the decreasing heavy rare earth elements on the surface of the magnet. As such, the heavy rare earth elements cannot diffuse into the interior of the magnet (e.g., the part with a thickness in the orientation direction greater than or equal to 5 mm). On one hand, the consumption of the heavy rare earth disposed on the surface of the magnet and the thickness of the RH layer disposed are both significantly increased as the thickness of the magnet in the orientation direction increases; on the other hand, the diffusion path is greatly extended as the thickness of the magnet in the orientation direction increases. A conventional method for diffusion in a large magnet is to prolong the time of diffusion, but the effect may become less effective as the thickness increases. Thus the concentration of the heavy rare earth is required to be controlled in the diffusion process. In the present disclosure, the inventor found that the concentration of the RH heavy rare earth can be adjusted by alternately disposing M layers and RH layers and disposing at least 1 M layer between the blank and the RH layer. In addition, in the present disclosure, the M powder has a melting point of 1000 °C or higher, and thus does not melt or undergo other chemical reactions in the thermal diffusion treatment process. Thus the M layer forms a concentration adjusting layer between the RH layer and the blank, and the concentration of the heavy rare earth elements in the RH layer can be adjusted through the M layer at a high temperature. The inventors found that the particle size distribution of the particles of the M powder is a key factor for adjusting the concentration. A large particle size of the powder will lead to the erosion of the blank and thus pits or other defects on the surface of the magnet. A small particle size of the powder may result in a low concentration of the heavy rare earth elements due to excessive densification of the powder, failing to effectively adjust the concentration of the heavy rare earth elements. Also, a large particle size will lead to a low concentration of the heavy rare earth elements while a small particle size cannot adjust the concentration of the heavy rare earth elements. For the diffusion treatment of a large magnet, heavy rare earth elements are required to form a stable flow path in the grain boundary of the magnet due to the excessive diffusion thickness. A higher diffusion concentration may enrich the heavy rare earth on the surface layer of the magnet and block the diffusion of the heavy rare earth into the magnet, while a lower concentration may lead to insufficient driving force for diffusion, greatly prolonging thermal diffusion time, and elevating production cost. When the powder in the M layer meets the condition of the present disclosure, the effect of the thermal diffusion treatment is optimal. The inventor also found that because the chemical properties of neodymium and praseodymium in the grain boundary are very active, the neodymium and praseodymium on the grain boundary of the surface of the magnet are prone to occur a displacement reaction with oxygen, thus bringing oxygen into the grain boundary. When the content of impurities such as oxygen in the grain boundary is increased, the molten state of the grain boundary is disrupted, reducing the wettability of the diffusion path and the uniformity of the coercivity among the surface and the interior of the magnet. For a magnet with a proper thickness, this may be compensated by prolonging the thermal diffusion time. However, for a magnet with a thickness in the diffusion direction greater than 10 mm, the entrance of oxygen will significantly disrupt the diffusion path and the uniformity of the coercivity among the surface and the interior of the magnet, and prolonging the thermal diffusion time possesses little improvement on the uniformity but greatly increasing production cost. Therefore, in the present disclosure, the content of oxygen in the M powder should be not greater than 3%, preferably not greater than 1%.

According to an embodiment of the present disclosure, in step (3), the thermal diffusion treatment comprises at least a DW thermal treatment and an ST thermal treatment.

According to an embodiment of the present disclosure, the DW thermal treatment specifically comprises: after the temperature is raised to a DW temperature, holding the temperature for a period of time. Preferably, the DW temperature is 280 °C to 480 °C, more preferably 320 °C to 400 °C. Preferably, the time of the DW thermal treatment is greater than or equal to 2 h, e.g., 3 h, 5 h, or 10 h. The inventor found that the majority of the organic solid and solvent in the diffusion part was removed during the DW thermal treatment, and since the melting points of the powders in the M layer are 1000 °C or higher, after the removal of the organic solid and solvent, the M powder is in direct contact with the blank, i.e., the M layer forms a concentration adjusting layer in a powder state.

According to an embodiment of the present disclosure, the DW thermal treatment is conducted in vacuum.

According to an embodiment of the present disclosure, in step (3), the ST thermal treatment comprises a low-temperature thermal treatment and a high-temperature thermal treatment, wherein the temperature of the low-temperature thermal treatment is 750 °C to 890 °C (e.g., 830 °C), and the temperature of the high-temperature thermal treatment is 830 °C to 970 °C (e.g., 870 °C or 890 °C). The difference between temperatures of the low-temperature thermal treatment and the high-temperature thermal treatment is greater than 30 °C, the time of the low-temperature thermal treatment and/or the high-temperature thermal treatment is not greater than 50 h, and the holding time is ≥ 2 h. Preferably, the ramping rate from the low-temperature thermal treatment to the high-temperature thermal treatment is 4-10 °C/min, e.g., 5 °C/min.

Preferably, the low-temperature thermal treatment comprises: after the temperature is raised to the temperature of the low-temperature thermal treatment, holding the temperature for a period of time. Preferably, the high-temperature thermal treatment comprises: after the temperature is raised to the temperature of the high-temperature thermal treatment, holding the temperature for a period of time. Preferably, the ramping rate during the low-temperature thermal treatment and the high-temperature thermal treatment is not specified, e.g., 4-10 °C/min, such as 5 °C/min.

According to a preferred embodiment of the present disclosure, in step (3), the ST thermal treatment comprises alternate low-temperature thermal treatments and high-temperature thermal treatments.

According to an embodiment of the present disclosure, the time of the ST thermal treatment is not less than 2 h, e.g., 3 h, 5 h, or 10 h.

According to an embodiment of the present disclosure, the ST thermal treatment is conducted in vacuum or in an inert gas atmosphere. For example, the inert gas is selected from nitrogen, argon, and the like.

According to an exemplary embodiment of the present disclosure, in step (3), the ST thermal treatment comprises a first temperature ramping stage, a first holding thermal treatment, a second temperature ramping stage, and a second holding thermal treatment, wherein the first temperature ramping stage comprises: raising the temperature from 400 °C to 790 °C in 70 min; the first holding thermal treatment comprises: holding the temperature at 790 °C for 480 min; the second temperature ramping stage comprises: raising the temperature from 790 °C to 940 °C in 30 min; and the second holding thermal treatment comprises: holding the temperature at 940 °C for 720 min.

According to an exemplary embodiment of the present disclosure, in step (3), the ST thermal treatment comprises a first temperature ramping stage, a first holding thermal treatment, a second temperature ramping stage, a second holding thermal treatment, a third temperature ramping stage, and a third holding thermal treatment, wherein the first temperature ramping stage comprises: raising the temperature from 420 °C to 750 °C in 70 min; the first holding thermal treatment comprises: holding the temperature at 750 °C for 300 min; the second temperature ramping stage comprises: raising the temperature from 750 °C to 810 °C in 30 min; the second holding thermal treatment comprises: holding the temperature at 810 °C for 420 min; the third **temperature** ramping stage comprises: raising the temperature from 780 °C to 870 °C in 40 min; and the third holding thermal treatment comprises: holding the temperature at 870 °C for 900 min.

In the prior art, during thermal diffusion treatment of a large sintered magnet (a thickness in the orientation direction ≥ 10 mm), it is prone to adopt a thermal treatment held at a single temperature basically in a range of 870-970 °C. The diffusion driving force provided by different temperatures is different. When the thickness of the magnet is increased, the conventional method is to elevate the diffusion temperature so as to increase the diffusion driving force, thereby achieving a deeper diffusion of the heavy rare earth elements. However, when the diffusion thickness (i.e., the thickness of the magnet in the orientation direction) reaches 10 mm or more, the heavy rare earth elements are easily supersaturated on the surface of the large magnet due to the direct contact between the large magnet and the heavy rare earth elements. On one hand, the heavy rare earth elements may easily enter the main phase of the grain, and on the other hand, a heavy rare earth layer may be formed on the surface of the magnet to hinder the subsequent diffusion of the heavy rare earth. Although the present disclosure achieves the regulation and control of the heavy rare earth elements by increasing the M layer and improves the above problems, it is also found by the inventor that alternate low-temperature and high-temperature thermal treatments during the ST thermal treatment significantly improve the diffusion depth, and particularly, the diffusion effect is superior when the ST thermal treatment condition described above is adopted. This is attributed to that: in the low-temperature thermal diffusion treatment process, when the holding thermal treatment temperature is lower than 750 °C, the RH of the heavy rare earth disposed on the surface of the magnet cannot be effectively diffused due to the excessively low temperature, and when the temperature is higher than 890 °C, the diffusion efficiency is too high to allow a sufficient displacement of the heavy rare earth and Nd in the grain boundary, leading to enrichment of heavy rare earth on the surface of the magnet and thus a reduced RH diffusion depth. When the holding thermal treatment temperature is higher than 970 °C in the high-temperature thermal diffusion treatment process, the heavy rare earth elements disposed on the surface can directly enter the main phase due to the excessively high temperature, and the effect of grain boundary diffusion cannot be achieved.

According to an embodiment of the present disclosure, after the ST thermal treatment, a quenching process is required, and the quenching process may be conducted by a method known in the art, e.g., a vacuum cooling process without thermal power output.

According to an embodiment of the present disclosure, the blank is sequentially washed with an acid solution and deionized water, and dried before the diffusion part is disposed. The acid solution may be selected from an acid solution known in the art, such as an aqueous hydrogen chloride solution, an aqueous nitric acid solution, and the like.

According to an embodiment of the present disclosure, the method further comprises: (4) after quenching, conducting an aging treatment in the following condition: an aging temperature of 430-650 °C, an aging time of greater than 30 min, and quenching to room temperature after the aging treatment is completed.

According to an embodiment of the present disclosure, the aging treatment is conducted in vacuum or in an inert gas atmosphere.

The present disclosure further provides use of the sintered R-Fe-B magnet described above in the fields of wind power generation, household motors, automobiles, medical equipment, or mobile communication devices, preferably in the field of wind power generation.

### Beneficial Effects

(1) The present disclosure provides a large sintered R-Fe-B magnet and a preparation method. Compared with the existing grain boundary diffusion method, the present disclosure solves the problems of the difficulty in the diffusion of the heavy rare earth into the magnet due to the excessive thickness of existing large sintered magnets, the excessive coercivity difference between the surface and the interior of the magnet after diffusion treatment, the excessive consumption of the heavy rare earth in diffusion, and the prolonged diffusion period.
(2) By disposing a diffusion part comprising an M layer and an RH layer on the surface of the blank of the magnet, and conducting a thermal diffusion treatment comprising a DW thermal treatment and an ST thermal treatment, a concentration adjustment layer is formed after the organic solid and the solvent in the diffusion layer are removed in the DW thermal treatment process, thus achieving the adjustment of the concentration of RH heavy rare earth. The heavy rare earth elements in the RH layer in the ST thermal treatment process are needed first to pass through the powder in the M layer to reach the surface of the magnet. Due to the presence of the M layer, the heavy rare earth is not in direct contact with the magnet, preventing the accumulation of heavy rare earth which may block the diffusion path in the grain boundary due to the excessive concentration of heavy rare earth on the surface of the magnet. The heavy rare earth concentration is controlled by the M layer during the diffusion, and will not be excessive due to the excessive amount of the heavy rare earth disposed on the surface of the magnet during the diffusion. The thermal diffusion treatment of a large sintered magnet is achieved by optimizing the structure of the diffusion part and combining a thermal diffusion treatment process, so as to give sintered magnets having a more uniform internal coercivity.

### BRIEF DESCRIPTION OF THE DRAWINGS

FIG. 1 is a schematic view of the state of a diffusion part undergone a DW thermal process; and
FIG. 2 is a schematic view of the sampling position on a sintered R-Fe-B magnet sample according to Example 1 (unit: mm).

### DETAILED DESCRIPTION

The embodiments of the present disclosure will be further illustrated in detail with reference to the following specific examples. It will be appreciated that the following examples are merely exemplary illustrations and explanations of the present disclosure, and should not be construed as limiting the protection scope of the present disclosure. All techniques implemented based on the content of the present disclosure described above are included within the protection scope of the present disclosure.

Unless otherwise stated, the raw materials and reagents used in the following examples are all commercially available products or can be prepared using known methods.

### Example 1

The procedures for manufacturing the large sintered magnet are as follows:
(1) A neodymium-iron-boron magnet (R-Fe-B magnet) was prepared from raw materials according to the formula: 29.1% of Nd, 1.2% of Dy, 1.5% of Co, 0.2% of Al, 0.1% of Ga, 0.2% of Ti, 0.17% of Cu, 0.98% of B, and the remaining of Fe. Raw materials were smelted in a furnace through strip casting process to manufacture neodymium-iron-boron alloy flakes with a thickness in a range of 0.1-0.5 mm. The alloy flakes were subjected to coarse crushing with hydrogen embrittlement process to give a powder. The powder was ground with a jet mill to give a fine powder with an SMD of 2.85 µm. The fine powder was oriented in a magnetic field, compressed, and molded to give a compact blank with a density of 3.98 g/cm³. The compact blank was then subjected to sintering in a sintering furnace and aging treatment to give a raw blank. The raw blank was processed to give a blank. The surface of the blank was washed with a nitric acid solution and deionized water, and dried to obtain a neodymium-iron-boron magnet blank A1 with dimensions of 80 mm × 40 mm × 11 mm, a dimensional tolerance of ±0.03 mm, and a thickness of Z = 11 mm in the orientation direction of A1.
(2) Diffusion part was disposed. Diffusion parts were disposed on 2 surfaces in the orientation direction of the blank A1. Each of the diffusion parts was in a two-layer structure and comprised an M layer and an RH layer. The M layer was in direct contact with the surface of the blank A1, and the RH layer was disposed on the surface of the M layer. The specific procedures are as follows:
(a) The manufacturing procedures of the M layer are as follows: Graphite powder (the content of oxygen in powder was 0.07%), an organic solid rosin-modified alkyd resin, and ethanol were prepared into a first slurry according to weight percentages of 55 wt%, 2 wt%, and 43 wt%, respectively. The first slurry was applied to the surface of the blank A1 by spraying, and dried by hot air blast at 60 °C to give the M layer with a thickness of 3±2 µm.
(b) An RH layer was disposed on the surface of the dried M layer by the following procedures: Terbium hydride powder, an organic solid rosin-modified alkyd resin, and ethanol were prepared into a second slurry according to weight percentages of 62 wt%, 3 wt%, and 35 wt%, respectively. The second slurry was applied to the surface of the M layer described above by spraying, and dried by hot air blast at 60 °C to give the RH layer with a thickness of 50±15 µm. A blank A2 was obtained after the diffusion parts were disposed on the surface of the blank A1.

(3) Thermal diffusion treatment: The blank A2 was placed in a graphite container for thermal diffusion treatment. The thermal diffusion treatment process was conducted in vacuum, and heating was started when the vacuum degree was ≤ 10 Pa. The thermal diffusion treatment process mainly comprised heating, DW, ST, and cooling, as described below:
1) Heating: the temperature was raised to 400 °C in 80 min;
2) DW: the temperature was held at 400 °C for 240 min;
3) Heating: the temperature was raised from 400 °C to 850 °C in 70 min;
4) ST1: the temperature was held at 850 °C for 480 min;
5) Heating: the temperature was raised from 850 °C to 940 °C in 30 min;
6) ST2: the temperature was held at 940 °C for 1080 min;

(4) Aging treatment: After the thermal diffusion treatment was finished, argon was filled, and the system was quenched with a fan to a temperature below 80 °C. After quenching, the system was heated to 500 °C for aging treatment at a ramping rate of 5 °C/min. The temperature was held for 120 min (the aging treatment refers to a thermal treatment process in which alloy workpieces, after solution treatment, cold plastic formation or casting and forging, are placed at a high temperature or kept at room temperature to maintain the variation in performance, shape and size over time). After the aging treatment, argon was filled again, and the system was quenched with a fan to a temperature below 80 °C to give a finished sintered neodymium-iron-boron magnet A3.

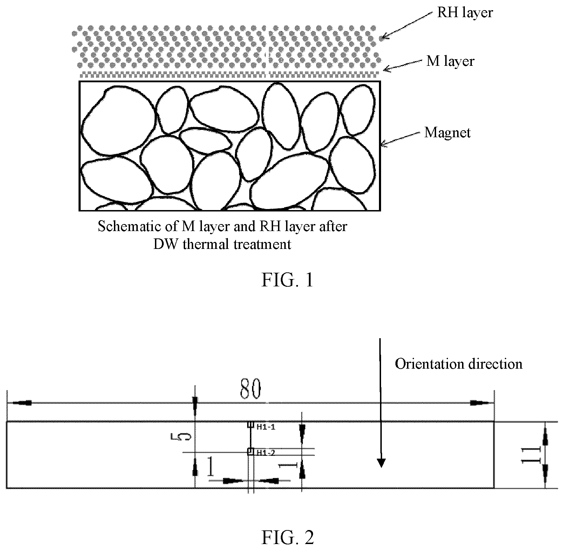

FIG. 1 is a schematic view of the diffusion part undergone a DW thermal process. After the DW process, the organic solid and the solvent were removed from the diffusion parts in the M layer. As such, the M layer in the diffusion part mainly comprised graphite powder, and the RH layer mainly comprised terbium hydride powder.
(5) The above sintered neodymium-iron-boron magnet A3 was tested as follows:
1) Sampling: As shown in FIG. 2, a diffusion cross-section area was obtained by sectioning the sintered neodymium-iron-boron magnet A3 in the orientation direction of the A3, and samples with the dimensions of 1 mm × 1 mm × 1 mm were taken at the surface and a position 5 mm away from the surface of the sintered magnet in the diffusion cross-sectional area, which were respectively designated as H1-1 and H1-2. The performances of the samples H1-1 and H1-2 of Example 1 were tested and compared. The results are shown in Table 1.
2) The test condition is as follows:
Sample size: 1 mm × 1 mm × 1 mm, tolerance: ±0.03 mm;
Temperature: 23 °C;
Instrument: HIRST PFM06 (upper detection limit of coercivity: 60 kOe, temperature range: 16-40 °C, minimum sample size: B1 × 1 × 1).

**Table 1. Performance of samples H1-1 and H1-2 in Example 1**

| **Item** | **Hcj (kA/m)** | **ΔH (kA/m)** |
|---|---|---|
| H1-1 | 2154 | 42 |
| H1-2 | 2112 | |

### Example 2

The procedures for manufacturing the large sintered magnet are as follows:
(1) A neodymium-iron-boron magnet (R-Fe-B magnet) was prepared from raw materials according to the formula: 28.6% of PrNd, 1.5% of Dy, 1.0% of Co, 0.1% of Al, 0.2% of Ga, 0.12% of Ti, 0.10% of Cu, 0.98% of B, and the remaining of Fe. Raw materials were smelted in a furnace through strip casting process to manufacture neodymium-iron-boron alloy flakes with a thickness in a range of 0.1-0.5 mm. The alloy flakes were subjected to coarse crushing with hydrogen embrittlement process to give a powder. The powder was ground with a jet mill to give a fine powder with an SMD of 2.85 µm. The fine powder was oriented in a magnetic field, compressed, and molded to give a compact blank with a density of 3.95 g/cm³. The compact blank was then subjected to sintering in a sintering furnace and aging treatment to give a raw blank. The raw blank was processed to give a blank. The surface of the blank was washed with a nitric acid solution and deionized water, and dried to obtain a neodymium-iron-boron blank B1 with dimensions of 100 mm × 50 mm × 15 mm, a dimensional tolerance of ±0.03 mm, and a thickness of Z = 15 mm in the orientation direction of B1.
(2) Diffusion part disposing: Diffusion part was disposed on a surface of the neodymium-iron-boron blank B1. The diffusion part was in a four-layer structure and comprised, sequentially from the surface of the neodymium-iron-boron blank B1, an M1 layer, an RH1 layer, an M2 layer, and an RH2 layer. The M1 layer was in direct contact with the blank B1. The specific procedures are as follows:
(a) The manufacturing procedures of the M1 layer are as follows: Molybdenum powder (the content of oxygen in powder was 0.65%), an organic solid polyvinyl butyral, and ethanol were prepared into a first slurry according to weight percentages of 60 wt%, 5 wt%, and 35 wt%, respectively. The first slurry was applied to the surface of the blank B1 by spraying, and dried by hot air blast at 60 °C to give the M1 layer with a thickness of 3±2 µm.
(b) An RH1 layer was disposed on the surface of the dried M1 layer by the following procedures: Dysprosium hydride powder, an organic solid polyvinyl butyral, and ethanol were prepared into a second slurry according to weight percentages of 60 wt%, 8 wt%, and 32 wt%, respectively. The second slurry was applied to the surface of the M1 layer by spraying, and dried by hot air blast at 60 °C to give the RH1 layer with a thickness of 40±15 µm.
(c) After drying, steps (a) and (b) were repeated to sequentially dispose an M2 layer and an RH2 layer with the first slurry and the second slurry in steps (a) and (b), respectively. The disposing of the diffusion parts on surfaces of the blank B1 was completed after drying to obtain a blank B2, with the thickness of the M2 layer being 2±1 µm and the thickness of the RH2 layer being 35±15 µm.

(3) Thermal diffusion treatment: The blank B2 was placed in a graphite container for thermal diffusion treatment. The thermal diffusion treatment process was conducted in vacuum. Heating was started when the vacuum degree is ≤ 10 Pa. The thermal diffusion treatment process mainly comprised heating, DW, ST, and cooling, as described below:
1) Heating: the temperature was raised from 50 °C to 420 °C in 80 min;
2) DW: the temperature was held at 420 °C for 240 min;
3) Heating: the temperature was raised from 420 °C to 750 °C in 70 min;
4) ST1: the temperature was held at 750 °C for 300 min;
5) Heating: the temperature was raised from 750 °C to 810 °C in 30 min;
6) ST2: the temperature was held at 810 °C for 420 min;
7) Heating: the temperature was raised from 780 °C to 870 °C in 40 min;
8) ST3: the temperature was held at 870 °C for 1200 min;

(4) Aging treatment: After the thermal diffusion treatment was finished, argon was filled, and the system was quenched with a fan to a temperature below 80 °C. After quenching, the system was heated to 520 °C for aging treatment at a ramping rate of 5 °C/min. The temperature was held for 300 min (the aging treatment refers to a thermal treatment process in which alloy workpieces, after solution treatment, cold plastic formation or casting and forging, are placed at a high temperature or kept at room temperature to maintain the variation in performance, shape and size over time). After the aging treatment, argon was filled again, and the system was quenched with a fan to a temperature below 80 °C to give a finished sintered neodymium-iron-boron magnet B3.
(5) The sintered neodymium-iron-boron magnet B3 of this example was tested with reference to Example **1,** except that the A3 was replaced with the B3, and the samples were designated as H2-1 and H2-2. The test results are shown in Table 2.

**Table 2. Performance of samples H2-1 and H2-2 in Example 2**

| **Item** | **Hcj (kA/m)** | **ΔH(KA/m)** |
|---|---|---|
| H2-1 | 1920 | 38 |
| H2-2 | 1881 | |

### Comparative Example 1

This comparative example produced a blank using the same process for manufacturing the samples as in Example 1, except that:
(2) Diffusion part disposing: Diffusion parts were disposed on 2 surfaces in the orientation direction of the blank A1, and an RH layer was directly disposed on the diffusion parts by the following procedures: Terbium hydride powder, an organic solid rosin-modified alkyd resin, and ethanol were prepared into a slurry according to weight percentages of 62 wt%, 3 wt%, and 35 wt%, respectively. The slurry was directly applied to the surface of the blank A1 by spraying, and dried by hot air blast at 60 °C to give the RH layer with a thickness of 50±15 µm.

The other steps (1), (3), and (4) were the same as Example 1, and a sintered neodymium-iron-boron magnet C3 was finally obtained in this comparative example. (5) The sintered neodymium-iron-boron magnet C3 was tested with reference to Example 1, except that the A3 was replaced with the C3, and samples D3-1 and D3-2 of Comparative Example 1 were obtained.

**Table 3. Performance of samples H3-1 and H3-2 in Comparative Example 1**

| **Item** | **Hcj (kA/m)** | **ΔH (kA/m)** |
|---|---|---|
| D3-1 | 2159 | 83 |
| D3-2 | 2076 | |

### Comparative Example 2

This comparative example produced a blank using the same process for manufacturing the samples as in Example 2, except that:
(2) Diffusion part disposing: The content of oxygen in the molybdenum powder used for the M layer was 5.5%, while the content of oxygen in the molybdenum powder used in Example 2 was 0.65%.
The other steps (1), (3), and (4) were the same as Example 2, and a sintered neodymium-iron-boron magnet D4 was finally obtained in this comparative example. Samples D4-1 and D4-2 were manufactured for Comparative Example 2. It can be seen that the overall performance of the samples was reduced and the uniformity of coercivity was deteriorated.

**Table 4. Performance of samples D4-1 and D4-2 in Comparative Example 2**

| **Item** | **Hcj (kA/m)** | **ΔH (kA/m)** |
|---|---|---|
| D4-1 | 1902 | 65 |
| D4-2 | 1837 | |

### Comparative Example 3

This comparative example was substantially the same as Example 2, except that the thermal diffusion treatment in step (3) is specifically as follows:
1) Heating: the temperature was raised from 50 °C to 420 °C in 80 min;
2) DW: the temperature was held at 420 °C for 240 min;
3) Heating: the temperature was raised from 420 °C to 870 °C in 140 min;
4) ST: the temperature was held at 870 °C for 900 min.
The other steps (1), (2), and (4) were the same as Example 1, and a sintered neodymium-iron-boron magnet E5 was finally obtained in this comparative example.
(5) The sintered neodymium-iron-boron magnet E5 of this example was tested with reference to Example 1, except that the A3 was replaced with the E5, and the samples were designated as E5-1 and E5-2. The test results are shown in Table 5.

**Table 5. Performance of samples E5-1 and E5-2 in Comparative Example 3**

| **Item** | **Hcj (kA/m)** | **ΔH (kA/m)** |
|---|---|---|
| E5-1 | 1913 | 67 |
| E5-2 | 1846 | |

## Claims

1. A preparation method of a sintered R-Fe-B magnet, comprising the following steps:
(1) manufacturing a blank of the R-Fe-B magnet having a thickness ≥ 10 mm;
(2) diffusion part disposing: disposing diffusion parts on at least 2 surfaces in the orientation direction of the blank obtained in step (1), **characterised in that** each of the diffusion parts comprises at least 1 RH layer and 1 M layer, the M layer is in direct contact with the surface of the blank, at least 1 M layer is disposed between the RH layer and the blank; and
(3) thermal diffusion treatment: conducting a thermal diffusion treatment on the blank with thick diffusion layers disposed in step (2) to give the sintered R-Fe-B magnet, wherein the method for manufacturing the M layer comprises: applying a slurry containing an M powder on 2 surfaces of the blank in the orientation direction, and drying to give the M layer,
wherein the slurry containing the M powder comprises the M powder, an organic solid, and optionally a solvent, wherein the mass ratio of the M powder to the organic solid to the solvent in the slurry containing the M powder is (20-70):(1-10):(0-50); wherein the M powder includes at least one of graphite powder, titanium powder, zirconium powder, molybdenum powder, tungsten powder, titanium oxide, zirconium oxide, molybdenum oxide, and tungsten oxide, and M powder has an oxygen atom content less than 3%;
wherein the sintered R-Fe-B magnet has a thickness not less than 10 mm in an orientation direction, any cross section along the orientation direction is marked as a diffusion cross-section area and one side of the diffusion cross-section area close to the outer surface of the sintered R-Fe-B magnet is marked as the surface of the diffusion cross-section area, and the difference between the coercivity of the surface of the diffusion cross-section area and the coercivity at 5 mm away from the surface of the diffusion cross-section area is △H, wherein △H is ≤ 50 kA/m.

2. The preparation method according to claim 1, wherein in step (2), the RH layer and the M layer are alternately disposed in the diffusion parts, wherein at least 1 M layer is disposed between the RH layer and the blank, the RH layer comprises 1-3 layers and the M layer comprises 1-3 layers;
illustratively, the diffusion part comprises 1 M layer and 1 RH layer;
illustratively, the diffusion part comprises 2 M layers and 2 RH layers disposed in an order from the surface of the blank of a first M layer, a first RH layer, a second M layer, and a second RH layer; preferably, the first M layer and the second M layer are
identical or different; preferably, the first RH layer and the second RH layer are
identical or different;
preferably, in the diffusion part, each RH layer has a thickness of 1 µm to 70 µm.

3. The preparation method according to claim 1 or 2, wherein the method for manufacturing the RH layer comprises: applying an RH slurry on 2 surfaces of the blank in the orientation direction, and drying to give the RH layer;
preferably, the RH slurry comprises a heavy rare earth element, an organic solid, and optionally a solvent;
preferably, the mass ratio of the heavy rare earth element to the organic solid to the solvent in the RH slurry is (40-70):(0.5-12):(0-50);
preferably, the heavy rare earth element includes at least one of metal dysprosium, metal terbium, dysprosium hydride, terbium hydride, dysprosium fluoride, terbium fluoride, dysprosium oxide, and terbium oxide;
preferably, the organic solid is at least one selected from rosin-modified alkyd resin, thermoplastic phenolic resin, urea-formaldehyde resin, and polyvinyl butyral;
preferably, the solvent is selected from at least one of an alcohol solvent, an ether solvent, and an aromatic hydrocarbon solvent;
preferably, in the diffusion part, each M layer has a thickness less than 20 µm and greater than 0.1 µm, preferably less than or equal to 10 µm;
preferably, in the diffusion part, the thickness ratio of each RH layer to each M layer is (1-70):(0.1-20).

4. The preparation method according to any one of claims 1-3, wherein M powder has an oxygen atom content less than 1%;
preferably, the M powder comprises a powder having a particle size less than 5 µm, wherein a powder having a particle size of between 0.5 µm and 1.8 µm is more than 50%, preferably more than 65%, of the total mass of the powder.

5. The preparation method according to any one of claims 1-4, wherein in step (3), the thermal diffusion treatment comprises at least a DW thermal treatment and an ST thermal treatment and a quenching process;
wherein the DW thermal treatment comprises: after the temperature is raised to a DW temperature, holding the temperature for a period of time, wherein the DW temperature is 280 °C to 480 °C, preferably 320 °C to 400 °C; the time of the DW thermal treatment is greater than or equal to 2 h;
the DW thermal treatment is conducted in vacuum;
wherein in step (3), the ST thermal treatment comprises a low-temperature thermal treatment and a high-temperature thermal treatment, wherein the temperature of the low-temperature thermal treatment is 750 °C to 890 °C, and the temperature of the high-temperature thermal treatment is 830 °C to 970 °C, wherein the difference between temperatures of the low-temperature thermal treatment and the high-temperature thermal treatment is greater than 30 °C, and the time of the low-temperature thermal treatment and/or the high-temperature thermal treatment is not greater than 50 h, wherein the holding time is ≥ 2 h; the ramping rate from the low-temperature thermal treatment to the high-temperature thermal treatment is 4-10 °C/min;
the low-temperature thermal treatment comprises: after the temperature is raised to the temperature of the low-temperature thermal treatment, holding the temperature for a period of time;
the high-temperature thermal treatment comprises: after the temperature is raised to the temperature of the high-temperature thermal treatment, holding the temperature for a period of time;
in step (3), the ST thermal treatment comprises alternate low-temperature thermal treatments and high-temperature thermal treatments;
the time of the ST thermal treatment is not less than 2 h;
the ST thermal treatment is conducted in vacuum or in an inert gas atmosphere.

6. The preparation method according to any one of claims 1-5, wherein the blank is sequentially washed with an acid solution and deionized water, and dried before the diffusion part is disposed;
preferably, the method further comprises: (4) after quenching, conducting an aging treatment in the following condition: an aging temperature of 430-650 °C, and an aging time of greater than 30 min, and quenching to room temperature after the aging treatment is completed;
preferably, the aging treatment is conducted in vacuum or in an inert gas atmosphere.

7. The preparation method according to any one of claims 1-6, wherein △H is not greater than 45 kA/m;
preferably, the thickness in the orientation direction is 10 mm to 20 mm;
preferably, the raw materials of the sintered R-Fe-B magnet comprise R, B, Fe, and optionally M, wherein:
R has a content by weight of 27 wt%-34 wt%, preferably 29 wt%-32 wt%;
M has a content by weight of 0 wt%-5 wt%, preferably 0 wt%-3 wt%;
preferably, R is selected from at least one of rare earth elements Nd, Pr, Tb, Dy, Gd, and Ho;
preferably, M is selected from at least one of Ti, V, Cr, Mn, Co, Ga, Cu, Si, Al, Zr, Nb, W, and Mo.

## Patentansprüche

1. Herstellungsverfahren eines gesinterten R-Fe-B-Magneten, umfassend die folgenden Schritte:
(1) Anfertigen eines Rohlings des R-Fe-B-Magneten mit einer Dicke von ≥ 10 mm;
(2) Anordnen des Diffusionsteils: Anordnen von Diffusionsteilen auf mindestens 2 Oberflächen in der Orientierungsrichtung des in Schritt (1) erhaltenen Rohlings, **dadurch gekennzeichnet, dass** jedes der Diffusionsteile mindestens 1 RH-Schicht und 1 M-Schicht umfasst, wobei die M-Schicht in direktem Kontakt mit der Oberfläche des Rohlings vorliegt, mindestens 1 M-Schicht zwischen der RH-Schicht und dem Rohling angeordnet ist; und
(3) Wärmediffusionsbehandlung: Durchführen einer Wärmediffusionsbehandlung an dem Rohling mit den in Schritt (2) angeordneten dicken Diffusionsschichten, um den gesinterten R-Fe-B-Magneten zu ergeben,
wobei das Verfahren zum Anfertigen der M-Schicht Folgendes umfasst: Aufbringen einer Aufschlämmung, die ein M-Pulver enthält, auf 2 Oberflächen des Rohlings in der Orientierungsrichtung und Trocknen, um die M-Schicht zu ergeben,
wobei die Aufschlämmung, die das M-Pulver enthält, das M-Pulver, einen organischen Feststoff und optional ein Lösungsmittel umfasst, wobei das Massenverhältnis des M-Pulver zu dem organischen Feststoff zu dem Lösungsmittel in der Aufschlämmung, die das M-Pulver enthält, (20-70):(1-10):(0-50) beträgt;
wobei das M-Pulver mindestens eines von Graphitpulver, Titanpulver, Zirkoniumpulver, Molybdänpulver, Wolframpulver, Titanoxid, Zirkoniumoxid, Molybdänoxid und Wolframoxid einschließt, und das M-Pulver einen Sauerstoffatomgehalt von weniger als 3 % aufweist;
wobei der gesinterte R-Fe-B-Magnet in einer Orientierungsrichtung eine Dicke von nicht weniger als 10 mm aufweist, jeglicher Querschnitt entlang der Orientierungsrichtung als eine Diffusionsquerschnittsfläche markiert ist und eine Seite der Diffusionsquerschnittsfläche nahe der äußeren Oberfläche des gesinterten R-Fe-B-Magneten als die Oberfläche der Diffusionsquerschnittsfläche markiert ist, und die Differenz zwischen der Koerzitivfeldstärke der Oberfläche der Diffusionsquerschnittsfläche und der Koerzitivfeldstärke in 5 mm Abstand von der Oberfläche der Diffusionsquerschnittsfläche △H beträgt, wobei △H ≤ 50 kA/m beträgt.

2. Herstellungsverfahren nach Anspruch 1, wobei in Schritt (2) die RH-Schicht und die M-Schicht abwechselnd in den Diffusionsteilen angeordnet sind, wobei zwischen der RH-Schicht und dem Rohling mindestens 1 M-Schicht angeordnet ist, wobei die RH-Schicht 1-3 Schichten umfasst und die M-Schicht 1-3 Schichten umfasst;
wobei das Diffusionsteil veranschaulichend 1 M-Schicht und 1 RH-Schicht umfasst;
wobei das Diffusionsteil veranschaulichend 2 M-Schichten und 2 RH-Schichten umfasst, die von der Oberfläche des Rohlings in folgender Reihenfolge angeordnet sind: eine erste M-Schicht, eine erste RH-Schicht, eine zweite M-Schicht und eine zweite RH-Schicht; wobei die erste M-Schicht und die zweite M-Schicht vorzugsweise identisch oder verschieden sind; wobei die erste RH-Schicht und die zweite RH-Schicht vorzugsweise identisch oder verschieden sind;
wobei jede RH-Schicht in dem Diffusionsteil eine Dicke von 1 µm bis 70 µm aufweist.

3. Herstellungsverfahren nach Anspruch 1 oder 2, wobei das Verfahren zum Anfertigen der RH-Schicht Folgendes umfasst: Aufbringen einer RH-Aufschlämmung auf 2 Oberflächen des Rohlings in der Orientierungsrichtung und Trocknen, um die RH-Schicht zu ergeben;
wobei die RH-Aufschlämmung vorzugsweise ein schweres Seltenerdelement, einen organischen Feststoff und optional ein Lösungsmittel umfasst;
wobei das Massenverhältnis des schweren Seltenerdelements zu dem organischen Feststoff zu dem Lösungsmittel in der RH-Aufschlämmung (40-70):(0,5-12):(0-50) beträgt;
wobei das schwere Seltenerdelement mindestens eines von Dysprosiummetall, Terbiummetall, Dysprosiumhydrid, Terbiumhydrid, Dysprosiumfluorid, Terbiumfluorid, Dysprosiumoxid und Terbiumoxid einschließt;
wobei der organische Feststoff vorzugsweise mindestens einer ist ausgewählt aus kolophoniummodifiziertem Alkydharz, thermoplastischem Phenolharz, Harnstoff-Formaldehyd-Harz und Polyvinylbutyral;
wobei das Lösungsmittel vorzugsweise ausgewählt wird aus mindestens einem aus einem Alkohollösungsmittel, einem Etherlösungsmittel oder einem aromatischen Kohlenwasserstofflösungsmittel;
wobei jede M-Schicht in dem Diffusionsteil vorzugsweise eine Dicke von weniger als 20 µm und mehr als 0,1 µm, vorzugsweise weniger als oder gleich 10 µm aufweist; wobei das Dickenverhältnis jeder RH-Schicht zu jeder M-Schicht in dem Diffusionsteil vorzugsweise (1-70):(0,1-20) beträgt.

4. Herstellungsverfahren nach einem der Ansprüche 1-3, wobei das M-Pulver einen Sauerstoffatomgehalt von weniger als 1 % aufweist;
wobei das M-Pulver vorzugsweise ein Pulver mit einer Partikelgröße von weniger als 5 µm umfasst, wobei ein Pulver mit einer Partikelgröße zwischen 0,5 µm und 1,8 µm mehr als 50 %, vorzugsweise mehr als 65 % der Gesamtmasse des Pulvers beträgt.

5. Herstellungsverfahren nach einem der Ansprüche 1-4, wobei in Schritt (3) die Wärmediffusionsbehandlung mindestens eine DW-Wärmebehandlung und eine ST-Wärmebehandlung und einen Abschreckprozess umfasst;
wobei die DW-Wärmebehandlung Folgendes umfasst: nach dem Erhöhen der Temperatur auf eine DW-Temperatur, Halten der Temperatur für einen Zeitraum, wobei die DW-Temperatur 280 °C bis 480 °C, vorzugsweise 320 °C bis 400 °C beträgt; wobei die Dauer der DW-Wärmebehandlung mehr als oder gleich 2 Stunden beträgt;
wobei die DW-Wärmebehandlung im Vakuum durchgeführt wird;
wobei in Schritt (3) die ST-Wärmebehandlung eine Niedertemperatur-Wärmebehandlung und eine Hochtemperatur-Wärmebehandlung umfasst, wobei die Temperatur der Niedertemperatur-Wärmebehandlung 750 °C bis 890 °C beträgt und die Temperatur der Hochtemperatur-Wärmebehandlung 830 °C bis 970 °C beträgt, wobei die Differenz zwischen den Temperaturen der Niedertemperatur-Wärmebehandlung und der Hochtemperatur-Wärmebehandlung mehr als 30 °C beträgt und die Dauer der Niedertemperatur-Wärmebehandlung und/oder der Hochtemperatur-Wärmebehandlung nicht mehr als 50 Stunden beträgt, wobei die Haltezeit ≥ 2 Stunden beträgt; wobei die Anstiegsrate von der Niedertemperatur-Wärmebehandlung zu der Hochtemperatur-Wärmebehandlung 4-10 °C/min beträgt;
wobei die Niedertemperatur-Wärmebehandlung Folgendes umfasst: nach dem Erhöhen der Temperatur auf die Temperatur der Niedertemperatur-Wärmebehandlung, Halten der Temperatur für einen Zeitraum;
wobei die Hochtemperatur-Wärmebehandlung Folgendes umfasst: nach dem Erhöhen der Temperatur auf die Temperatur der Hochtemperatur-Wärmebehandlung, Halten der Temperatur für einen Zeitraum;
wobei die ST-Wärmebehandlung in Schritt (3) abwechselnde Niedertemperatur-Wärmebehandlungen und Hochtemperatur-Wärmebehandlungen umfasst;
wobei die Dauer der ST-Wärmebehandlung nicht weniger als 2 Stunden umfasst; wobei die ST-Wärmebehandlung im Vakuum oder in einer Inertgasatmosphäre durchgeführt wird.

6. Herstellungsverfahren nach einem der Ansprüche 1-5, wobei der Rohling nacheinander mit einer Säurelösung und deionisiertem Wasser gewaschen und getrocknet wird, bevor das Diffusionsteil angeordnet ist;
wobei das Verfahren ferner vorzugsweise Folgendes umfasst: (4) nach dem Abschrecken, Durchführen eine Alterungsbehandlung unter den folgenden Bedingungen: eine Alterungstemperatur von 430-650 °C und eine Alterungsdauer von mehr als 30 min und Abschrecken auf Raumtemperatur nach Abschluss der Alterungsbehandlung;
wobei die Alterungsbehandlung vorzugsweise im Vakuum oder in einer Inertgasatmosphäre durchgeführt wird.

7. Herstellungsverfahren nach einem der Ansprüche 1-6, wobei △H nicht mehr als 45 kA/m beträgt;
wobei die Dicke in der Orientierungsrichtung 10 mm bis 20 mm beträgt;
wobei die Rohstoffe des gesinterten R-Fe-B-Magneten R, B, Fe und optional M umfassen, wobei:
R einen Gewichtsgehalt von 27 Gew.-%-34 Gew.-%, vorzugsweise 29 Gew.-%-32 Gew.-% aufweist;
M einen Gewichtsgehalt von 0 Gew.-%-5 Gew.-%, vorzugsweise 0 Gew.-%-3 Gew.-% aufweist;
R vorzugsweise ausgewählt wird aus mindestens einem der Seltenerdelemente Nd, Pr, Tb, Dy, Gd und Ho;
und M vorzugsweise ausgewählt wird aus mindestens einem von Ti, V, Cr, Mn, Co, Ga, Cu, Si, Al, Zr, Nb, W und Mo.

## Revendications

1. Procédé de préparation d'un aimant R-Fe-B fritté, comprenant les étapes suivantes :
(1) la fabrication d'une ébauche d'aimant R-Fe-B ayant une épaisseur ≥ 10 mm ;
(2) la disposition des parties de diffusion : disposer des parties de diffusion sur au moins 2 surfaces selon la direction d'orientation de l'ébauche obtenue à l'étape (1), **caractérisé en ce que** chacune des parties de diffusion comprend au moins 1 couche RH et 1 couche M, la couche M étant en contact direct avec la surface de l'ébauche, au moins 1 couche M étant disposée entre la couche RH et l'ébauche ; et
(3) le traitement par diffusion thermique : réaliser un traitement par diffusion thermique sur l'ébauche avec des couches de diffusion épaisses disposées à l'étape (2) pour obtenir l'aimant R-Fe-B fritté,
dans lequel le procédé de fabrication de la couche M comprend : l'application d'une suspension épaisse contenant une poudre M sur 2 surfaces de l'ébauche selon la direction d'orientation, et le séchage pour obtenir la couche M,
dans lequel la suspension épaisse contenant la poudre M comprend la poudre M, un solide organique et facultativement un solvant, dans lequel le rapport massique entre la poudre M et le solide organique et le solvant dans la suspension épaisse contenant la poudre M est (20-70):(1-10):(0-50) ;
dans lequel la poudre M comprend au moins l'une parmi poudre de graphite, poudre de titane, poudre de zirconium, poudre de molybdène, poudre de tungstène, oxyde de titane, oxyde de zirconium, oxyde de molybdène et oxyde de tungstène, et la poudre M a une teneur en atomes d'oxygène inférieure à 3 % ;
dans lequel l'aimant R-Fe-B fritté a une épaisseur non inférieure à 10 mm selon une direction d'orientation, toute coupe transversale le long de la direction est désignée comme une aire en coupe transversale de diffusion, et un côté de l'aire en coupe transversale de diffusion, proche de la surface extérieure de l'aimant R-Fe-B fritté, est désigné comme la surface de l'aire en coupe transversale de diffusion, et la différence entre la force coercitive de la surface de l'aire en coupe transversale de diffusion et la force coercitive à 5 mm de la surface de l'aire en coupe transversale de diffusion est △H, dans lequel △H est ≤ 50 kA/m.

2. Procédé de préparation selon la revendication 1, dans lequel, à l'étape (2), la couche RH et la couche M sont disposées en alternance dans les parties de diffusion, dans lequel au moins 1 couche M est disposée entre la couche RH et l'ébauche, la couche RH comprend 1 à 3 couches et la couche M comprend 1 à 3 couches ;
à titre d'exemple, la partie de diffusion comprend 1 couche M et 1 couche RH ;
à titre d'exemple, la partie de diffusion comprend 2 couches M et 2 couches RH disposées selon un ordre à partir de la surface de l'ébauche d'une première couche M, d'une première couche RH, d'une deuxième couche M et d'une deuxième couche RH ; de préférence, la première couche M et la deuxième couche M sont identiques ou différentes ; de préférence, la première couche RH et la deuxième couche RH sont identiques ou différentes ;
de préférence, dans la partie de diffusion, chaque couche RH a une épaisseur de 1 µm à 70 µm.

3. Procédé de préparation selon la revendication 1 ou 2, dans lequel le procédé de fabrication de la couche RH comprend : l'application d'une suspension épaisse RH sur 2 surfaces de l'ébauche selon la direction d'orientation, et le séchage pour obtenir la couche RH ;
de préférence, la suspension épaisse RH comprend une terre rare lourde, un solide organique et facultativement un solvant ;
de préférence, le rapport massique entre la terre rare lourde et le solide organique et le solvant dans la suspension épaisse RH est (40-70):(0,5-12):(0-50) ;
de préférence, la terre rare lourde comporte au moins l'un parmi métal de dysprosium, métal de terbium, hydrure de dysprosium, hydrure de terbium, fluorure de dysprosium, fluorure de terbium, oxyde de dysprosium et oxyde de terbium ;
de préférence, le solide organique est au moins l'un choisi à partir de résine alkyde modifiée à la colophane, résine phénolique thermoplastique, résine urée-formaldéhyde et butyral de polyvinyle ;
de préférence, le solvant est choisi à partir d'au moins l'un parmi un solvant alcoolique, un solvant éther et un solvant hydrocarboné aromatique ;
de préférence, dans la partie de diffusion, chaque couche M a une épaisseur inférieure à 20 µm et supérieure à 0,1 µm, de préférence inférieure ou égale à 10 µm ;
de préférence, dans la partie de diffusion, le rapport d'épaisseur entre chaque couche RH et chaque couche M est (1-70):(0,1-20).

4. Procédé de préparation selon l'une quelconque des revendications 1 à 3, dans lequel la poudre M a une teneur en atomes d'oxygène inférieure à 1 % ;
de préférence, la poudre M comprend une poudre ayant une granulométrie inférieure à 5 µm, dans lequel une poudre ayant un granulométrie d'entre 0,5 µm et 1,8 µm représente plus de 50 %, de préférence plus de 65 %, de la masse totale de la poudre.

5. Procédé de préparation selon l'une quelconque des revendications 1 à 4, dans lequel, à l'étape (3), le traitement par diffusion thermique comprend au moins un traitement thermique DW et un traitement thermique ST et un processus de trempe ;
dans lequel le traitement thermique DW comprend : après que la température soit élevée jusqu'à une température DW, le maintien de la température pendant une période, dans lequel la température DW est de 280 °C à 480 °C, de préférence de 320 °C à 400 °C ; la durée du traitement thermique DW est supérieure ou égale à 2 h ;
le traitement thermique DW est réalisé sous vide ;
dans lequel, à l'étape (3), le traitement thermique ST comprend un traitement thermique à basse température et un traitement thermique à haute température, dans lequel la température du traitement thermique à basse température est de 750 °C à 890 °C et la température du traitement thermique à haute température est de 830 °C à 970 °C, dans lequel la différence entre les températures du traitement thermique à basse température et du traitement thermique à haute température est supérieure à 30 °C, et la durée du traitement thermique à basse température et/ou du traitement thermique à haute température n'est pas supérieure à 50 h, dans lequel la durée de maintien est ≥ 2 h ; la vitesse de montée en température du traitement thermique à basse température jusqu'au traitement thermique à haute température est de 4 à 10 °C/min ;
le traitement thermique à basse température comprend : après que la température soit élevée jusqu'à la température du traitement thermique à basse température, le maintien de la température pendant une période ;
le traitement thermique à haute température comprend : après que la température soit élevée jusqu'à la température du traitement thermique à haute température, le maintien de la température pendant une période ;
à l'étape (3), le traitement thermique ST comprend en alternance des traitements thermiques à basse température et des traitements thermiques à haute température ;
la durée du traitement thermique ST n'est pas inférieure à 2 h ;
le traitement thermique ST est réalisé sous vide ou sous atmosphère de gaz inerte.

6. Procédé de préparation selon l'une quelconque des revendications 1 à 5, dans lequel l'ébauche est lavée séquentiellement avec une solution acide et de l'eau désionisée, puis séchée avant que la partie de diffusion soit disposée ;
de préférence, le procédé comprend en outre : (4) après la trempe, la réalisation d'un traitement de vieillissement dans les conditions suivantes : une température de vieillissement de 430 à 650 °C et une durée de vieillissement supérieure à 30 min, et une trempe à température ambiante une fois le traitement de vieillissement achevé ; de préférence, le traitement de vieillissement est réalisé sous vide ou sous atmosphère de gaz inerte.

7. Procédé de préparation selon l'une quelconque des revendications 1 à 6, dans lequel △H n'est pas supérieur à 45 kA/m ;
de préférence, l'épaisseur selon la direction d'orientation est de 10 mm à 20 mm ;
de préférence, les matières premières de l'aimant R-Fe-B fritté comprennent R, B, Fe et facultativement M, dans lequel :
R a une teneur en poids de 27 % à 34 % en poids, de préférence de 29 % à 32 % en poids ;
M a une teneur en poids de 0 % à 5 % en poids, de préférence de 0 % à 3 % en poids ;
de préférence, R est choisi à partir d'au moins l'un parmi les terres rares Nd, Pr, Tb, Dy, Gd et Ho ;
de préférence, M est choisi à partir d'au moins l'un parmi Ti, V, Cr, Mn, Co, Ga, Cu, Si, Al, Zr, Nb, W et Mo.
